# EUROPEAN PATENT APPLICATION

(11) **EP 4 303 833 A1**
(43) Date of publication of application: **10.01.2024**
(21) Application number: 22182797.5
(22) Date of filing: 04.07.2022
(51) Int. Cl.: G06V 20/56, G06V 10/25

(54) **DRIVER ASSISTANCE SYSTEM**

(71) Applicant: Harman Becker Automotive Systems GmbH, 76307 Karlsbad (DE)
(72) Inventor: ELIZOV, Roee, 81925 Garching (DE); HARIHARAKRISHNAN, Anilkumar, 82054 Sauerlach (DE)
(74) Representative: Westphal, Mussgnug & Partner, Patentanwälte mbB

(57) **Abstract**

A driver assistance system (500) for a vehicle (10), the driver assistance system (500) comprising a camera (502) mounted on the vehicle (10) and configured to capture one or more images inside and/or outside of the vehicle (10), and a processing unit (504), wherein the camera (502) has a defined field of view FOV, the camera (502) comprises an optical lens that causes a distortion of the captured images, the processing unit (504) is configured to perform distortion compensation on the images captured by the camera (502), wherein a pixel density in the resulting compensated images is increased in defined areas of the image due to the distortion, and the defined areas of increased pixel density in the compensated images correspond to a region of interest ROI within the image, wherein the region of interest ROI is smaller than the field of view FOV of the camera (502).

## Description

### TECHNICAL FIELD

The disclosure relates to a driver assistance system, in particular to a camera-based driver assistance system.

### BACKGROUND

Driver assistance may include any relief that is provided to an individual associated with a vehicle with the aim of increasing individual protection and enhancing driver experience. Driver assistance systems including outward facing cameras may be configured to enhance a driver's awareness by providing detailed information about the vehicle's environment that may not be apparent to the driver. Images that are captured by means of one or more outward facing cameras may be displayed on a display of the vehicle, for example. Alternatively, it is also possible to analyze the images captured with outward facing cameras and identify any potentially dangerous obstacles in the surroundings of the vehicle. If any obstacles are identified, a warning may be generated that may be perceived by the driver of the vehicle. Other driver assistance systems include inward facing cameras. Inward facing cameras may capture images of a driver or any other occupants of the vehicle, for example. Such driver assistance systems may be configured to detect a driver's attention or drowsiness level, for example, by evaluating the images captured by the inward facing cameras. Driver fatigue is a major cause of road accidents in general, and in particular of severe road accidents. Therefore, driver fatigue has a huge impact on road safety. Drivers may be drowsy when driving at night or in the early morning, towards the end of a long journey, or for any other reason. Many advanced driver assistance systems (ADAS) monitor a driver's attention level / drowsiness level and generate a warning if it is detected that the attention level decreases and/or the drowsiness level increases. A driver's attention or drowsiness level can be detected by a camera-based driver assistance system by monitoring driver parameters such as a duration of eyelid closure and/or a frequency of eyelid closure, for example. There is a need for a camera-based driver assistance system (including inward and/or outward facing cameras) and related method that are able to reliably detect any obstacles and/or to reliably detect any changes of driver parameters that are monitored by the system, in order to increase road safety.

### SUMMARY

A driver assistance system of the present disclosure can be used for a vehicle and includes a camera mounted on the vehicle and configured to capture one or more images inside and/or outside of the vehicle, and a processing unit, wherein the camera has a defined field of view, the camera includes an optical lens that causes a distortion of the captured images, the processing unit is configured to perform distortion compensation on the images captured by the camera, wherein a pixel density in the resulting compensated images is increased in defined areas of the image due to the distortion, and the defined areas of increased pixel density in the compensated images correspond to a region of interest within the image, wherein the region of interest is smaller than the field of view of the camera.

The present disclosure further provides a method. The method includes capturing one or more images inside and/or outside of a vehicle by means of a camera mounted on the vehicle, wherein the camera has a defined field of view, and the camera includes an optical lens that causes a distortion of the captured images, and performing distortion compensation on the images captured by the camera by means of a processing unit, wherein a pixel density in the resulting compensated images is increased in defined areas of the image due to the distortion, and the defined areas of increased pixel density in the compensated images correspond to a region of interest within the image, wherein the region of interest is smaller than the field of view of the camera.

Other systems, methods, features and advantages of the present disclosure will be or will become apparent to one with skill in the art upon examination of the following detailed description and figures. It is intended that all such additional systems, methods, features and advantages be included within this description, be within the scope of the invention and be protected by the following claims.

### BRIEF DESCRIPTION OF THE DRAWINGS

The arrangement may be better understood with reference to the following description and drawings. The components in the figures are not necessarily to scale, emphasis instead being placed upon illustrating the principles of the invention. Moreover, in the figures, like referenced numerals designate corresponding parts throughout the different views.
Figure 1 schematically illustrates a vehicle with a plurality of cameras mounted thereon.
Figure 2 schematically illustrates different examples of radial distortions.
Figure 3 schematically illustrates a field of view of an exemplary camera and a region of interest within the field of view.
Figure 4 schematically illustrates the resulting pixel densities within the field of view for different radial distortions.
Figure 5 schematically illustrates a driver assistance system according to one embodiment of the present disclosure.
Figure 6 illustrates a flow chart of a method according to one embodiment of the present disclosure.

### DETAILED DESCRIPTION

As required, detailed embodiments of the present invention are disclosed herein; however, it is to be understood that the disclosed embodiments are merely examples of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

It is recognized that directional terms that may be noted herein (e.g., "upper", "lower", "inner", "outer", "top", "bottom", etc.) simply refer to the orientation of various components of an arrangement as illustrated in the accompanying figures. Such terms are provided for context and understanding of the disclosed embodiments.

The driver assistance systems and related methods according to the various embodiments described herein are able to reliably detect any obstacles and/or to reliably detect any changes of driver parameters that are monitored by the system in order to increase road safety.

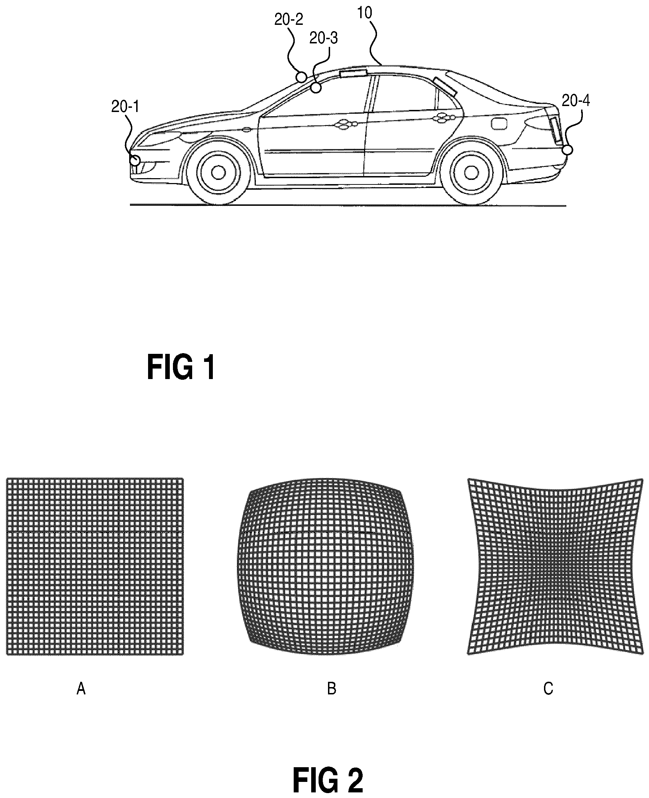

Referring to Figure 1, a vehicle 10 with a plurality of cameras 20-1, 20-2, 20-3, 20-4 mounted thereto is schematically illustrated. In the example illustrated in Figure 1, cameras 20-1, 20-2 and 20-4 are outward facing cameras, while camera 20-3 is an inward facing camera. Different cameras 20-N may be arranged in any suitable position with regard to the vehicle 10 in order to be able to capture images that are required to implement certain driver assistance systems. A driver assistance system generally may include one or more inward facing cameras and/or one or more outward facing cameras. The number and orientation of the cameras depends on the purpose of the driver assistance system.

Cameras 20-N may include on or more optical lenses. Optical lenses may cause the images that are captured by the respective camera 20-N to be distorted. An image is considered to be distorted when the straight lines of an image appear to be deformed or curved unnaturally. An example of an image without distortion is schematically illustrated in Figure 2 A. Figure 2 further illustrates two further common types of radial distortion, namely barrel distortion B and pincushion distortion C. When barrel distortion occurs, image magnification decreases with distance from the optical axis. The apparent effect is that of an image which has been mapped around a sphere (or barrel). When pincushion distortion occurs, image magnification increases with the distance from the optical axis. The visible effect is that lines that do not go through the center of the image are bowed inwards, towards the center of the image, like a pincushion. Mathematically, barrel and pincushion distortion are quadratic, meaning they increase as the square of distance from the center. Other distortions are generally possible, but do not generally occur in conventional lenses. Different kinds of distortion occur, depending on the kind of lens system that is used for a camera and depending on whether the lens can or cannot be removed from the camera.

Distortion commonly occurs from aberrations near the edges of the image. Each type of distortion usually develops through different variables. Barrel distortion, for example, is often the result of a lens at full zoom, while pincushion distortion occurs most often when telephoto lenses are used. Fisheye lenses, for example, which take hemispherical views, utilize barrel distortion as a way to map an infinitely wide object plane into a finite image area. In a zoom lens, barrel distortion occurs in the middle of the lens's focal length range and is worst at the wide-angle end of the range. Concave (minus) spherical lenses also tend to result in barrel distortion. Convex (plus) spherical lenses tend to result in pincushion distortion.

As can be seen from the above, distortion is usually associated with zoom lenses, in particular large-range zooms, but may also be found in prime lenses and depends on focal distance. Distortion is generally considered as an artifact that is to be corrected.

The driver assistance systems described in the following, however, utilize (take advantage of) this artifact. As can be seen in Figure 2 B, if barrel distortion occurs, pixel density is lower in the center of the image as compared to the edges and especially the corners. If pincushion distortion occurs (Figure 2 C), pixel density is higher in the center of the image as compared to the edges and especially the corners of the image. For regions of an image with higher pixel density, more information is generally available as compared to regions of the image with lower pixel density.

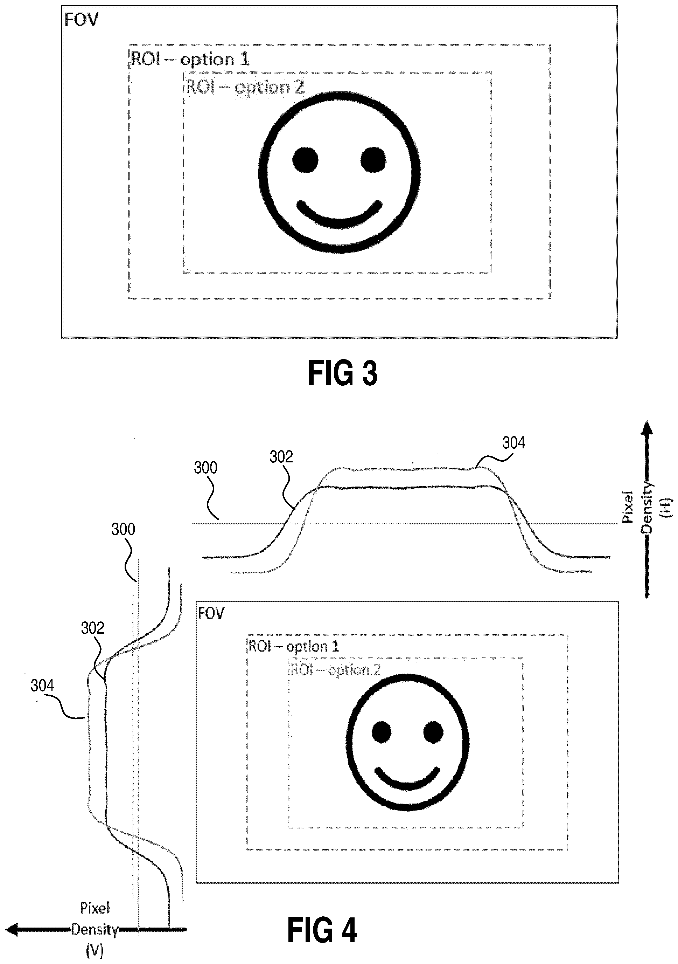

Now referring to Figure 3, a field of view FOV of a camera of a driver assistance system is schematically illustrated. The camera may be an inward facing camera of a vehicle that captures one or more images inside of the vehicle. In this way, the camera may capture a driver or passenger of the vehicle, for example. Such systems are often also referred to as driver monitoring systems DMS, or occupant monitoring systems OMS. It is however also possible that the camera is an outward facing camera that captures one or more images outside of the vehicle. In this way, the camera may capture pedestrians or obstacles in the surroundings of the vehicle. The camera may be rotatable such that it can capture one or more images of the inside and/or the outside of the vehicle, depending on its orientation. In most cases, only certain sections or details of an image captured with a camera of a driver assistance system are of particular relevance, e.g., the section in which the face of the driver or passenger, or in which a pedestrian or obstacle in the surroundings of the vehicle can be found. Therefore, the region of interest ROI within an image captured by a camera of a driver assistance system is generally smaller than the field of view FOV of the camera (the entire area of the image). The region of interest ROI may have any suitable size. Figure 3 schematically illustrates a larger region of interest ROI according to a first example (option 1), and a smaller region of interest ROI according to a second example (option 2). The size of the region of interest ROI may depend on the size of the object of interest that is captured within the field of view FOV. For example, the region of interest ROI is usually larger if an object of interest captured on the image is located close to the camera, and the region of interest may be comparably small if the same object of interest or another object of interest having a similar size is located further away from the camera.

According to one embodiment of the present disclosure, a driver assistance system includes a camera that is configured to capture one or more images having a defined field of view FOV. The camera includes an optical lens that causes distortion of the one or more captured images. If, for example, a region of interest ROI is located at the center of the captured images, a camera with a lens causing pincushion distortion may be used. In this way, pixel density in the region of interest ROI is increased as compared to other, irrelevant or less relevant, regions of the image. The pixel density depending on a position within the captured image (field of view FOV) adapted to different regions of interest ROI is schematically illustrated in Figure 4, wherein a region of interest ROI according to a first option is larger than a region of interest ROI according to a second option. For the larger region of interest ROI (option 1) the pixel density is low in regions within the field of view FOV that lie outside of the region of interest ROI and essentially has a first value over a greater part of the region of interest ROI. For the smaller region of interest ROI (option 2) the areas of low pixel density in areas outside the region of interest are larger as compared to option 1. The pixel density essentially has a second value that is larger than the first value over a greater part of the region of interest ROI. The area of increased pixel density (first/second value) is larger for the larger region of interest ROI, and smaller for the smaller region of interest ROI.

The size of the area of increased pixel density may depend on the kind of camera or lens that is used to capture the picture and on the magnitude of the zoom of a zoom lens, for example. For a camera including a lens that does not cause any distortion, pixel density is essentially equal for all positions within the captured image (line 300). With a lens causing moderate pincushion distortion (e.g., zoom lens at partial zoom), pixel density is increased for large parts of the image. A lower pixel density in this case usually only exists close to the edges of the image (line 302). With a lens causing strong pincushion distortion (e.g., zoom lens at full zoom), pixel density is highly increased at the center of the image, and decreases more rapidly towards the edges of the image (line 304). If the position of the region of interest ROI corresponds to the region of the image having the highest pixel density, more information will be available for the region of interest ROI than for any irrelevant or less relevant regions of the image lying within the field of view FOV but outside of the region of interest ROI.

Radial distortion in an image can be corrected by means of image processing. Standard approaches include, for example, approximating, locally linearizing, and iterative solvers. Generally speaking, the distortion can be corrected by means of any suitable image signal processing method, e.g., utilizing common optical distortion compensation blocks. Different methods for distortion compensation are generally known and will not be described in detail herein. The resulting corrected image, however, due to the original distortion, still includes an increased detail level within the region of interest ROI. When presenting the corrected image to the user or when further processing the corrected image, more information (image data) is available for the region of interest ROI than for other regions within the field of view FOV.

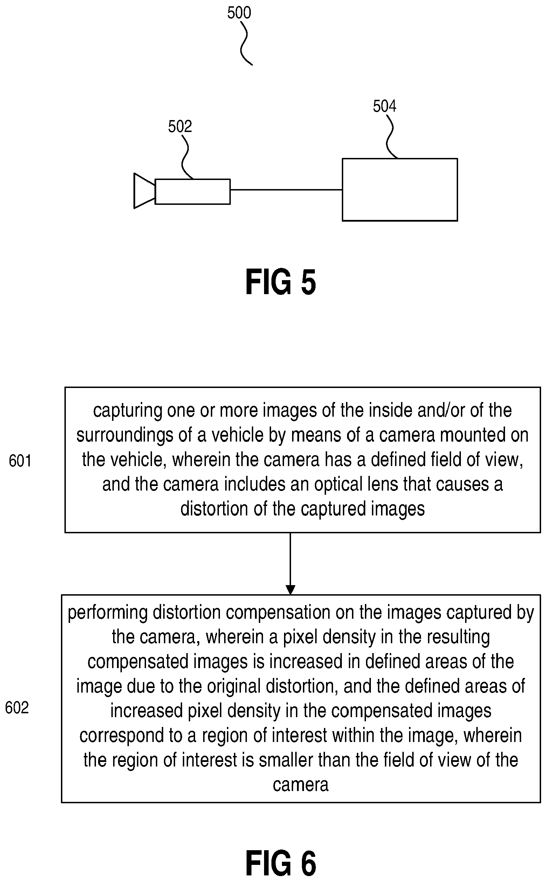

Now referring to Figure 5, a driver assistance system 500 according to one embodiment of the present disclosure is schematically illustrated. The driver assistance system 500 includes a camera 502 configured to capture one or more images. The camera 502 includes an optical lens, wherein the optical lens causes one or more images captured with the camera 502 to be distorted. The driver assistance system 500 further includes a processing unit 504. The distorted images captured by the camera 502 are provided to the processing unit 504. The processing unit 504 is configured to perform distortion compensation on the captured images. The resulting compensated images may then be further processed. Further processing may occur in the processing unit 504 or in a separate processing unit (not specifically illustrated). Further processing may include identifying potentially dangerous situations, and generating an alert that may be perceived by a driver and/or occupant of the vehicle if a potentially dangerous situation has been identified.

A situation may be considered potentially dangerous if an increased likelihood of collision with a detected object or obstacle is detected, or if an increased drowsiness level or decreased driver attention level is detected, for example. Many other potentially dangerous situations generally may be detected.

The camera 502 may be arranged on a vehicle such that a region of interest ROI within the field of view FOV of the camera 502 corresponds to a region of increased pixel density of the captured images, the pixel density depending on the distortion caused by the optical lens.

An inward facing camera may be static, for example. The camera may be oriented towards a driver's seat or a passenger seat of the vehicle. Although different persons may have different sizes, a person's head will most likely be arranged within the center of the image when the person is seated in the respective seat. The region of interest ROI (the person's head or face), therefore corresponds or at least overlaps to a large amount with the region of increased pixel density at the center of the image, if an optical lens causing pincushion distortion is used. It is, however, also possible that the camera is movable such that the region of increased pixel density can be aligned with the region of interest ROI when the head of an occupant of the vehicle is recognized, e.g., by facial recognition techniques.

Outward facing cameras may also be static or movable. Pedestrians or other obstacles may not always be detected in the same area of the images captured with the camera. Therefore, if a static camera with an optical lens causing pincushion distortion (area of increased pixel density in the center of the field of view FOV) is used, for example, it may happen that an obstacle is detected within the field of view FOV, but outside of the area of increased pixel density. Therefore, a movable camera may be used, for example. Once an obstacle is detected, the orientation of the camera may be adjusted such that the region of increased pixel density is aligned with the region of interest ROI in which the obstacle was detected. However, this may not be necessarily required. Outward facing cameras may also be static. If an outward facing camera is arranged to monitor the road in front of or behind the vehicle, it may be assumed that no objects of interest are captured within the upper third of the image. Objects that are located next to the road, but not on the road, towards the sides of the image may also be of lower interest. The region of higher pixel density, therefore, may be arranged in those parts of the image (lower two thirds, center) where objects of interest are more likely to be detected.

Now referring to Figure 6, a method according to one embodiment of the present disclosure is schematically illustrated in a flow diagram. The method includes capturing one or more images inside and/or outside of a vehicle by means of a camera mounted on the vehicle (step 601), wherein the camera has a defined field of view, and the camera includes an optical lens that causes a distortion of the captured images, and performing distortion compensation on the images captured by the camera by means of a processing unit (step 602), wherein a pixel density in the resulting compensated images is increased in defined areas of the image due to the distortion, and the defined areas of increased pixel density in the compensated images correspond to a region of interest within the image, wherein the region of interest is smaller than the field of view of the camera.

The description of embodiments has been presented for purposes of illustration and description. Suitable modifications and variations to the embodiments may be performed in light of the above description or may be acquired from practicing the methods. The described arrangements are exemplary in nature, and may include additional elements and/or omit elements. As used in this application, an element recited in the singular and proceeded with the word "a" or "an" should not be understood as excluding the plural of said elements, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The described systems are exemplary in nature, and may include additional elements and/or omit elements. The subject matter of the present disclosure includes all novel and non-obvious combinations and sub-combinations of the various systems and configurations, and other features, functions, and/or properties disclosed. The following claims particularly disclose subject matter from the above description that is regarded to be novel and non-obvious.

## Claims

1. A driver assistance system (500) for a vehicle (10), the driver assistance system (500) comprising:
a camera (502) mounted on the vehicle (10) and configured to capture one or more images inside and/or outside of the vehicle (10); and
a processing unit (504), wherein
the camera (502) has a defined field of view FOV,
the camera (502) comprises an optical lens that causes a distortion of the captured images,
the processing unit (504) is configured to perform distortion compensation on the images captured by the camera (502), wherein a pixel density in the resulting compensated images is increased in defined areas of the image due to the distortion, and
the defined areas of increased pixel density in the compensated images correspond to a region of interest ROI within the image, wherein the region of interest ROI is smaller than the field of view FOV of the camera (502).

2. The driver assistance system (500) of claim 1, wherein the camera (502) comprises an optical lens that causes a barrel distortion.

3. The driver assistance system (500) of claim 1, wherein the camera (502) comprises an optical lens that causes a pincushion distortion.

4. The driver assistance system (500) of claim 3, wherein the optical lens comprises a telephoto lens.

5. The driver assistance system (500) of any of the preceding claims, wherein the driver assistance system (500) is further configured to present the compensated images on a display of the vehicle (10).

6. The driver assistance system (500) of any of the preceding claims, wherein the processing unit (504) is configured to perform distortion compensation by means of image signal processing.

7. The driver assistance system (500) of any of the preceding claims, wherein the processing unit (504) is further configured to further process the compensated images.

8. The driver assistance system (500) of claim 7, wherein further processing the compensated images comprises identifying potentially dangerous situations, and generating an alert that may be perceived by a driver and/or an occupant of the vehicle (10) if a potentially dangerous situation has been identified.

9. The driver assistance system of claim 8, wherein the processing unit (504) is configured to identify objects or obstacles in the surroundings of the vehicle (10), and to determine a probability of collision of the vehicle (10) and the identified objects or obstacles, wherein a potentially dangerous situation is identified if a probability of collision exceeds a defined threshold.

10. The driver assistance system of claim 8 or 9, wherein further processing the compensated images comprises determining one or more driver or occupant parameters, and determining a drowsiness level and/or an attention level of the driver or occupant of the vehicle (10) based on the driver or occupant parameters, wherein a potentially dangerous situation is identified if the drowsiness level exceeds a defined threshold and/or if the attention level falls below a defined threshold.

11. The driver assistance system (500) of any of the preceding claims, wherein the camera (502) is a movable camera, and the processing unit (504) is configured to determine the region of interest ROI within the field of view FOV of the camera, and to align the region of increased pixel density with the region of interest ROI by changing an orientation of the camera (502).

12. A method comprising
capturing one or more images inside and/or outside of a vehicle (10) by means of a camera (502) mounted on the vehicle (10), wherein the camera (502) has a defined field of view FOV, and the camera (502) comprises an optical lens that causes a distortion of the captured images; and
performing distortion compensation on the images captured by the camera (502) by means of a processing unit (504), wherein
a pixel density in the resulting compensated images is increased in defined areas of the image due to the distortion, and
the defined areas of increased pixel density in the compensated images correspond to a region of interest ROI within the image, wherein the region of interest ROI is smaller than the field of view FOV of the camera (502).

## Amended claims

### Amended claims in accordance with Rule 137(2) EPC.

1. A driver assistance system (500) for a vehicle (10), the driver assistance system (500) comprising:
a camera (502) mounted on the vehicle (10) and configured to capture one or more images inside and/or outside of the vehicle (10); and
a processing unit (504), wherein
the camera (502) has a defined field of view FOV,
the camera (502) comprises an optical lens that causes a distortion of the captured images, wherein, due to the distortion, each of the captured images comprises at least one defined area of increased pixel density in which a pixel density is higher than in other areas of the captured image,
the processing unit (504) is configured to perform distortion compensation on the images captured by the camera (502), wherein a resulting compensated image, due to the distortion of the originally captured image, still comprises the at least one defined area of increased pixel density, and
the camera (502) is a movable camera, and the processing unit (504) is configured to determine the region of interest ROI within the field of view FOV of the camera, and to align areas of increased pixel density with the region of interest ROI by changing an orientation of the camera (502) such that the defined areas of increased pixel density in the compensated images correspond to a region of interest ROI within the image, wherein the region of interest ROI is smaller than the field of view FOV of the camera (502).

2. The driver assistance system (500) of claim 1, wherein the camera (502) comprises an optical lens that causes a barrel distortion.

3. The driver assistance system (500) of claim 1, wherein the camera (502) comprises an optical lens that causes a pincushion distortion.

4. The driver assistance system (500) of claim 3, wherein the optical lens comprises a telephoto lens.

5. The driver assistance system (500) of any of the preceding claims, wherein the driver assistance system (500) is further configured to present the compensated images on a display of the vehicle (10).

6. The driver assistance system (500) of any of the preceding claims, wherein the processing unit (504) is configured to perform distortion compensation by means of image signal processing.

7. The driver assistance system (500) of any of the preceding claims, wherein the processing unit (504) is further configured to further process the compensated images.

8. The driver assistance system (500) of claim 7, wherein further processing the compensated images comprises identifying potentially dangerous situations, and generating an alert that may be perceived by a driver and/or an occupant of the vehicle (10) if a potentially dangerous situation has been identified.

9. The driver assistance system of claim 8, wherein the processing unit (504) is configured to identify objects or obstacles in the surroundings of the vehicle (10), and to determine a probability of collision of the vehicle (10) and the identified objects or obstacles, wherein a potentially dangerous situation is identified if a probability of collision exceeds a defined threshold.

10. The driver assistance system of claim 8 or 9, wherein further processing the compensated images comprises determining one or more driver or occupant parameters, and determining a drowsiness level and/or an attention level of the driver or occupant of the vehicle (10) based on the driver or occupant parameters, wherein a potentially dangerous situation is identified if the drowsiness level exceeds a defined threshold and/or if the attention level falls below a defined threshold.

11. A method comprising
capturing one or more images inside and/or outside of a vehicle (10) by means of a movable camera (502) mounted on the vehicle (10), wherein the camera (502) has a defined field of view FOV, the camera (502) comprises an optical lens that causes a distortion of the captured images, and wherein, due to the distortion, each of the captured images comprises at least one defined area of increased pixel density in which a pixel density is higher than in other areas of the captured image; and
performing distortion compensation on the images captured by the camera (502) by means of a processing unit (504), wherein
a resulting compensated image, due to the distortion of the originally captured image, still comprises the at least one defined area of increased pixel density, and the method further comprises
determining the region of interest ROI within the field of view FOV of the camera, and aligning the areas of increased pixel density with the region of interest ROI by changing an orientation of the movable camera (502) such that the defined areas of increased pixel density in the compensated images correspond to a region of interest ROI within the image, wherein the region of interest ROI is smaller than the field of view FOV of the camera (502).
